# FASCICULE DE BREVET EUROPEEN

(11) **EP 3 847 901 B1**
(45) Date de publication et mention de la délivrance du brevet: **02.07.2025**
(21) Numéro de dépôt: 21150066.5
(22) Date de dépôt: 04.01.2021
(51) Int. Cl.: A23B 2/88, A22C 17/00, A22C 25/20, A23B 4/09, F25D 3/10, F25C 5/04

(54) **PROCÉDÉ ET INSTALLATION DE TRANSFORMATION D'UN PRODUIT LIQUIDE OU PÂTEUX EN PARTICULES SURGELÉES DANS UN APPAREIL DE HACHAGE ROTATIF (« CUTTER »)**
VERFAHREN UND ANLAGE ZUR UMWANDLUNG EINES FLÜSSIGEN ODER PASTÖSEN PRODUKTS IN GEFRORENE TEILCHEN IN EINEM ROTIERENDEN ZERKLEINERUNGSGERÄT ("CUTTER")
METHOD AND INSTALLATION FOR TRANSFORMING A LIQUID OR PASTY PRODUCT INTO FROZEN PARTICLES IN A ROTARY MINCING DEVICE ("CUTTER")

(30) Priorité: 10.01.2020 FR 2000204
(43) Date de publication de la demande: 14.07.2021
(73) Titulaire: L'Air Liquide, société anonyme pour l'Étude et l'Exploitation des procédés Georges Claude, 75007 Paris (FR); Air Liquide France Industrie, 75007 Paris (FR)
(72) Inventeur: POIRIER, Alban, 75007 PARIS (FR); COUSIN, Franck, 75007 PARIS (FR); CHARVE, Etienne, 75007 PARIS (FR); LUCAIN, Benjamin, 33270 Floirac Cedex (FR)
(74) Mandataire: Air Liquide

(56) Documents cités:
- EP-A1- 0 744 578
- EP-A1- 1 152 183
- EP-A2- 0 145 544
- WO-A1-2011/070283
- WO-A1-2019/180632
- WO-A1-97/01287
- WO-A2-2008/007000
- FR-A1- 2 589 367
- FR-A1- 2 939 499

## Description

La présente invention concerne le domaine de l'industrie alimentaire, et elle s'intéresse plus particulièrement aux procédés de transformation d'un produit liquide ou semi-liquide ou pâteux en particules surgelées, dans un appareil de découpe ou hachage rotatif, cette industrie en France appelle ces appareils des « cutter » (anglicisme).

L'invention est définie par les revendications.

On peut citer ici l'exemple de l'aligot. L'aligot est on le sait une spécialité culinaire à base de purée de pommes de terre, de fromage, de crème, de beurre, et d'ail.

Certains sites producteurs d'aligo sont alors intéressés par le fait de pouvoir surgeler cet aligot sous forme de poudre.

Or, ce produit est connu pour avoir une très forte viscosité au mélange.

Mais d'autres produits de cette industrie sont concernés par de telles demandes, on peut citer le cas de produits de la viande ou encore de purées.

Des essais ont été menés par la Demanderesse en malaxeur traditionnel, avec une injection d'azote liquide en partie basse d'un malaxeur, et en mettant en œuvre une régulation sur une consigne de température au sein de la masse ou sur un couple de l'arbre de mélange.

Ces essais que l'on peut qualifier d'essais « selon les dispositifs de l'art antérieur » (on pourra par exemple se reporter aux dispositifs des documents EP-744 578 ou WO2008/007000, ou encore WO2011070283), donnent ici en effet un produit final obtenu sous forme de poudre mais dont la granulométrie est hétérogène, assez grosse et présentant des blocs de produit (amas). A cela s'ajoute un phénomène de collage du produit en fond de mélangeur, difficilement nettoyable.

Cette solution antérieure est donc opérationnelle mais présente des limitations problématiques en terme de qualité du produit final.

FR2589367 décrit un procédé de granulation-congélation de produits pâteux par malaxage dudit produit, en présence de neige carbonique en quantité suffisante pour entraîner la granulation dudit produit par solidification, puis la congélation des granulés obtenus.

Un des objectifs de la présente invention est alors de proposer une nouvelle technologie de transformation d'un produit liquide ou pâteux en particules surgelées.

Comme on le verra plus en détails dans ce qui suit, la présente invention propose d'utiliser un appareil de découpe (hachage) rotatif (cette industrie utilise l'appellation anglo-saxonne de « cutter») i.e un matériel qui était classiquement utilisé pour la fabrication de produits de boucherie et charcuterie.

Rappelons qu'un « cutter » est un bol (ou auge) rotatif muni de couteaux en rotation placés sur un rayon du bol. On l'a donc compris le bol lui-même est en rotation. En d'autres termes, le bol tourne et les couteaux tournent dans le bol en rotation, mais généralement pas dans le même axe (le couteau tourne perpendiculairement au bol).

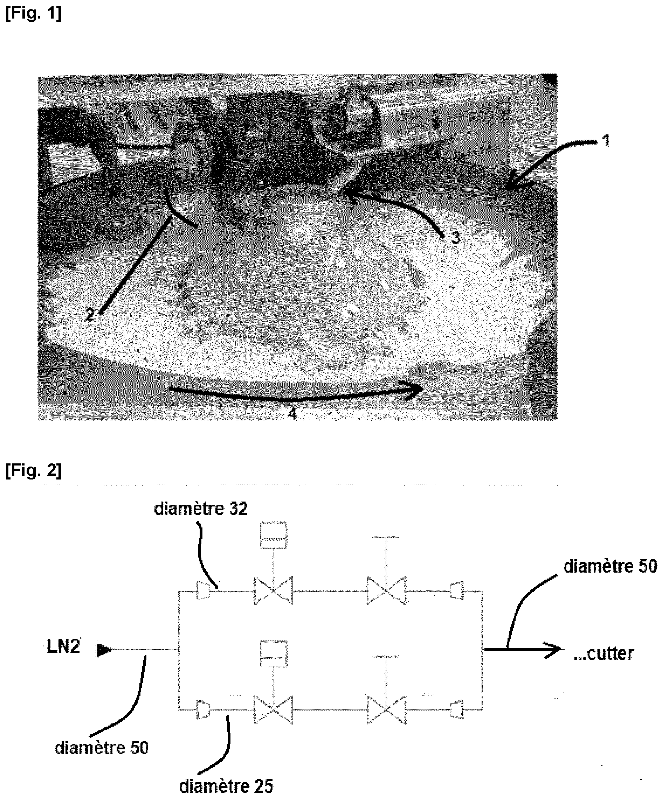

[Fig. 1] annexée illustre un exemple de tel appareil.

Classiquement sur ce genre d'appareil, de la viande en morceaux est mise dans le bol en rotation, l'opérateur ajoute épices, sauce, gras ... et au final un produit présentant une allure de pâte homogène est obtenu (pour des applications de fourrage, fabrication de saucisses etc.....).

La proposition effectuée ici est d'utiliser un tel cutter rotatif non pas pour obtenir une pâte comme selon ses usages connus en charcuterie, mais pour obtenir une poudre surgelée, à partir d'un produit initialement pâteux ou liquide ou semi liquide, en mettant en œuvre dans le cutter un cryogène, préférentiellement de l'azote liquide.

Les essais menés par Demanderesse dans le cadre de la présente invention sur un cutter rotatif de grande capacité (240 kg), sur de l'aligot, montrent en effet des résultats extrêmement intéressants.

En effet le produit obtenu a montré un bien meilleur aspect que dans le mélangeur classique évoqué ci-dessus, à savoir une granulométrie plus fine, plus homogène, l'absence de gros amas de produit, et l'absence de produits restant collés au fond du bol.

L'intérêt du cutter est bien sur lié à sa fonction de "hachage" via les couteaux, couteaux qui ne sont pas présents dans un mélangeur classique, mais aussi aux vitesses très élevées qui peuvent être atteintes avec un tel cutter, qui sont de l'ordre de 4000 tr/min, contrairement aux vitesses pratiquées dans un mélangeur classique qui sont considérées comme très lentes (de l'ordre de 10 tr/min).

Les débits de production atteints durant ces essais étaient conséquents on l'a dit : 240 kg/lot et un temps de 7 à 10 minutes pour passer de 90°C à -30°C.

La présente invention propose alors d'adopter les conditions opératoires suivantes pour une telle injection d'un cryogène ( qui est de l'azote liquide) dans un cutteur rotatif :
- Les débits d'azote liquide à injecter dans le cutter sont conséquent jusqu'à 3000 l/h (600 l/h pour le lot de produit traité ici, valeur bien entendu dépendante de la nature du produit, de la masse du lot etc ...), et on peut considérer que l'on se placera selon l'invention dans la majorité des cas entre 600 l/h et 1000 l/h, voire entre 750 et 1000 l/h.
- Une injection basse du type de celle pratiquées dans les malaxeurs de l'art antérieur évoqués plus haut est ici impossible puisque le bol est en rotation, donc seule une injection en partie haute du cutter est envisageable.
   Compte tenu du sens de rotation du bol et donc du sens de rotation du produit dans l'espace, la buse de projection du cryogène est préférentiellement positionnée de façon à ce que le produit rencontre le cryogène avant de rencontrer le/les couteaux, ceci pour augmenter l'efficacité des couteaux, et améliorer ainsi le mélange entre le cryogène et le produit au niveau des couteaux et affiner ainsi la granulométrie du produit.
- De part l'expérience (on pourra se reporter au document WO2011070283) on sait que dans les malaxeurs classiques, une injection haute de l'azote liquide présente un mauvais rendement des frigories. L'injection haute étant ici, de par la configuration d'un cutter, inévitable, on l'a dit, on propose selon la présente invention des conditions permettant d'optimiser les consommations et de simplifier cette injection.
- Pour les raisons suivantes, on préfère éviter la mise en œuvre d'une rampe d'injection haute traditionnelle telle que celles utilisées dans un tunnel de surgélation qui sont généralement constituées d'un ensemble de buses de pulvérisation reliés entre elles par des tubes, buses de faible diamètre, typiquement compris entre 0.5 et 1 mm, solution peu avantageuse car de faible rendement (lié au taux de diphasique), on préfère alors selon la présente invention les conditions suivantes :
   - Contrairement à ce qui pourrait constituer une démarche technique logique, on s'attache à injecter à basse pression, c'est-à-dire à une pression inférieure ou égale à 1 bar, par exemple aux alentours de 0.4 bar, en mettant en œuvre un gros diamètre de canalisation d'injection de l'azote (typiquement plusieurs dizaines de mm), pour permettre de limiter les pertes de charge et le diphasique créé dans la canalisation, l'objectif étant de disposer d'un liquide cryogénique franc à l'injecteur, sans pulvérisation (spray) qui serait due à de l'azote sous forme gazeuse, l'azote liquide s'écoule alors « comme de l'eau » (pas en spray comme dans un tunnel cryogénique), à des vitesses de sortie situées dans la gamme 0.5 - 1.5 m/s, par exemple à 1 m/s, donc très faible, afin d'éviter à l'azote de rebondir sur le produit et de repartir directement sous forme liquide à l'extraction, vitesse que l'on peut qualifier de faible par rapport aux ordres de grandeur pratiqués dans les tunnels (aux alentours de 5 à 10 m/s).

Selon un des modes préférés de mise en œuvre de l'invention on propose un système d'alimentation en azote liquide de la canalisation débouchant dans la zone de hachage qui se divise en deux branches :
- Une branche que l'on peut qualifier de « gros débit », par exemple équipée d'une vanne de laminage pour calibrer ce débit ; et
- Une branche que l'on peut qualifier de « petit débit », par exemple équipée d'une vanne de laminage pour calibrer ce petit débit , seconde branche présentant un diamètre de canalisation plus petit que celui de la branche « gros débit » ;
- Selon le gap entre une consigne de température et la valeur réelle de la température mesurée au sein de la masse de produit, on peut alors mettre en œuvre la branche gros débit ou la branche petit débit ou les deux. Cette solution est très avantageuse par rapport à ce que pourrait offrir une unique branche équipée de vannes proportionnelles, très onéreuses, tandis que cette technique à double ligne permet d'atteindre la consigne plus doucement, notamment quand la température approche de la consigne, réalisant in fine des économies de cryogène.

A titre d'exemple, injections petit débit et gros débit sont ouvertes au démarrage du cycle de traitement, une fois parvenu à un gap de 10 °C entre la température réelle et la consigne, l'injection petit débit est ouverte et la voie gros débit est fermée.

On comprend que les notions de « petit débit » et de « gros débit » devront être adaptées à chaque production, mais afin d'illustrer ce point on peut donner l'exemple suivant : pour un débit global cible qui serait, comme dans l'exemple développé plus haut de 3000 l/h, on pourra adopter une gros débit de 2000 l/h et un petit débit de 1000 l/h (2/3, 1/3).

On peut bien sûr, sans sortir du cadre de la présente invention, qualifier le « gros débit » de premier débit, et le « petit débit » de second débit, second débit inférieur au premier.

Selon l'invention on recommande la mise en place d'une extraction de gaz dans la partie supérieure de l'appareil, dont l'objectif est d'éviter les surpressions notamment sur le couvercle du cutter (donc les fuites de cryogène, l'envol de produit ...). A cette fin on privilégie une vitesse d'extraction très faible, ne dépassant pas préférentiellement 10 m/s.
[Fig. 1] annexée illustre un exemple de t'un tel appareil :
   - en référence 1 on voit le bol de l'appareil
   - en référence 2 on voit l'ensemble de couteaux (tournant dans un plan sensiblement vertical)
   - en référence 3 on visualise le buse d'arrivée de cryogène selon l'invention, en amont des couteaux quand on considère le sens de rotation du bol (sens en référence 4).
[Fig. 2] annexée illustre un exemple de structure d'alimentation en cryogène à deux lignes, avec des indications de diamètres données en mm.

L'invention concerne alors un procédé de fabrication de particules solides, à partir d'une composition alimentaire liquide ou semi-liquide ou pâteuse, selon lequel on met en œuvre les mesures suivantes :
- On dispose d'un appareil de hachage rotatif (« cutter ») muni d'un bol et de couteaux de hachage, apte à accueillir la composition à traiter ;
- On alimente en un liquide cryogénique, qui est de l' azote liquide, l'espace intérieur du bol à l'aide d'une canalisation de délivrance présentant en son extrémité au moins une buse de projection ;
- Le diamètre de la canalisation et de la buse de projection étant tels que le cryogène est amené à une pression inférieure ou égale à 1 bar et à une vitesse située dans la gamme allant de 0.5 à 1,5 m/s ;
- Le liquide cryogénique étant injecté en partie haute de l'appareil.

## Revendications

1. Procédé de fabrication de particules solides, à partir d'une composition alimentaire liquide ou semi-liquide ou pâteuse, selon lequel on met en œuvre les mesures suivantes :
- On dispose d'un appareil de hachage rotatif (« cutter ») muni d'un bol (1) et de couteaux de hachage (2), apte à accueillir la composition à traiter ;
- On alimente en un liquide cryogénique, qui est de l' azote liquide, l'espace intérieur du bol à l'aide d'une canalisation de délivrance présentant en son extrémité au moins une buse de projection (3) ;
- Le diamètre de la canalisation et de la buse de projection étant tels que le cryogène est amené à une pression inférieure ou égale à 1 bar et à une vitesse située dans la gamme allant de 0.5 à 1,5 m/s ;
- Le liquide cryogénique étant injecté en partie haute de l'appareil.

2. Procédé selon la revendication 1, **se caractérisant en ce que** compte tenu du sens de rotation du bol (4) et donc du sens de rotation du produit dans l'espace, la buse de projection du cryogène est positionnée de façon à ce que le produit rencontre le cryogène avant de rencontrer les couteaux.

3. Procédé selon la revendication 1 ou 2, **se caractérisant en ce que** l'on alimente en liquide cryogénique la canalisation de délivrance par un système d'alimentation qui comporte deux branches :
- Une première branche apte à délivrer un premier débit, par exemple équipée d'une vanne de laminage pour calibrer ce premier débit ; et
- Une seconde branche apte à délivrer un second débit , par exemple équipée d'une vanne de laminage pour calibrer ce second débit , second débit inférieur au premier débit, seconde branche présentant un diamètre de canalisation plus petit que celui de la première branche;
et **en ce que** selon le gap entre une consigne de température et la valeur réelle de la température mesurée au sein de la masse de produit, on met en œuvre la première branche de débit ou la seconde branche ou les deux.

4. Procédé selon l'une des revendications précédentes, **se caractérisant en ce que** l'on précède à une extraction de gaz dans la partie supérieure de l'appareil, avec une vitesse d'extraction inférieure ou égale à 10 m/s.

## Patentansprüche

1. Verfahren zur Herstellung von festen Teilchen ausgehend von einer flüssigen oder halbflüssigen oder pastösen Nahrungsmittelzusammensetzung, gemäß dem die folgenden Maßnahmen umgesetzt werden:
- Bereitstellen eines rotierenden Zerkleinerungsgeräts ("Cutter"), der über eine Schale (1) und Zerkleinerungsmesser (2) verfügt und dazu fähig ist, die zu verarbeitende Zusammensetzung aufzunehmen;
- Versorgen des Innenraums der Schale mit einer kryogenen Flüssigkeit, die Flüssigstickstoff ist, mit Hilfe einer Abgabeleitung, die an ihrem Ende mindestens eine Spritzdüse (3) aufweist;
- wobei der Durchmesser der Leitung und der Spritzdüse derart sind, dass das Kryogen mit einem Druck kleiner als oder gleich 1 bar und mit einer Geschwindigkeit im Bereich von 0,5 bis 1,5 m/s zugeführt wird;
- wobei die kryogene Flüssigkeit im oberen Teil des Geräts eingespritzt wird.

2. Verfahren nach Anspruch 1, **dadurch gekennzeichnet, dass** unter Berücksichtigung der Drehrichtung der Schale (4) und somit der Drehrichtung des Produkts im Raum die Spritzdüse für das Kryogen so positioniert ist, dass das Produkt auf das Kryogen trifft, bevor es auf die Messer trifft.

3. Verfahren nach Anspruch 1 oder 2, **dadurch gekennzeichnet, dass** die Abgabeleitung durch ein Versorgungssystem mit der kryogenen Flüssigkeit versorgt wird, das zwei Zweige umfasst:
- einen ersten Zweig, der dazu fähig ist, eine erste Durchflussmenge abzugeben, beispielsweise ausgerüstet mit einem Drosselventil, um diese erste Durchflussmenge zu kalibrieren; und
- einen zweiten Zweig, der dazu fähig ist, eine zweite Durchflussmenge abzugeben, beispielsweise ausgerüstet mit einem Drosselventil, um diese zweite Durchflussmenge zu kalibrieren, wobei die zweite Durchflussmenge kleiner als die erste Durchflussmenge ist, wobei der zweite Zweig einen kleineren Leitungsdurchmesser aufweist als der erste Zweig;
und dass je nach Abweichung zwischen einem Temperatursollwert und dem Istwert der im Inneren der Produktmasse gemessenen Temperatur der erste Durchflussmengenzweig oder der zweite Zweig oder beide eingesetzt werden.

4. Verfahren nach einem der vorhergehenden Ansprüche, **dadurch gekennzeichnet, dass** im oberen Teil des Geräts eine Gasextraktion mit einer Extraktionsgeschwindigkeit kleiner als oder gleich 10 m/s vorgenommen wird.

## Claims

1. Method for manufacturing solid particles, from a liquid or semi-liquid or pasty food composition, according to which the following measures are implemented:
- providing a rotary chopping device (cutter), which is equipped with a bowl (1) and chopping blades (2) and can receive the composition to be processed;
- supplying a cryogenic liquid, which is liquid nitrogen, to the interior space of the bowl by means of a delivery pipe, the end of which has at least one spray nozzle (3);
- the diameter of the pipe and of the spray nozzle being such that the cryogen is provided at a pressure of less than or equal to 1 bar and at a speed in the range from 0.5 to 1.5 m/s;
- the cryogenic liquid being injected in the upper portion of the device.

2. Method according to Claim 1, **characterized in that**, taking into account the direction of rotation of the bowl (4) and thus the direction of rotation of the product in the space, the nozzle for spraying the cryogen is positioned so that the product makes contact with the cryogen before making contact with the blades.

3. Method according to Claim 1 or 2, **characterized in that** cryogenic liquid is supplied to the delivery pipe by a supply system that has two branches:
- a first branch, which can deliver a first flow rate and is for example equipped with a throttling valve in order to calibrate this first flow rate; and
- a second branch, which can deliver a second flow rate and is for example equipped with a throttling valve in order to calibrate this second flow rate, the second flow rate being less than the first flow rate, the second branch having a pipe diameter that is smaller than that of the first branch;
and **in that**, depending on the gap between a temperature setpoint and the actual value of the temperature measured within the mass of product, use is made of the first flow rate branch or the second branch or both.

4. Method according to one of the preceding claims, **characterized in that** a gas extraction is carried out in the upper portion of the device, at an extraction speed of less than or equal to 10 m/s.
